Europäisches Patentamt

**European Patent Office**

**Office européen des brevets**

(19)

(11) Veröffentlichungsnummer: **0 158 007**
**B1**

(12) # EUROPÄISCHE PATENTSCHRIFT

(45) Veröffentlichungstag der Patentschrift:
25.11.87

(21) Anmeldenummer: 85100505.8

(22) Anmeldetag: 18.01.85

(51) Int. Cl.⁴: **H 02 M 3/00**, H 02 J 9/06,
**H 01 R 23/70**

(54) **Vorrichtung zur redundanten Stromversorgung.**

(30) Priorität: 20.03.84 DE 3410194

(43) Veröffentlichungstag der Anmeldung:
16.10.85 Patentblatt 85/42

(45) Bekanntmachung des Hinweises auf die Patenterteilung:
25.11.87 Patentblatt 87/48

(84) Benannte Vertragsstaaten:
AT BE CH DE FR GB IT LI NL SE

(56) Entgegenhaltungen:
US-A-3 993 935

(73) Patentinhaber: Siemens Aktiengesellschaft Berlin
und München, Wittelsbacherplatz 2, D-8000
München 2 (DE)

(72) Erfinder: Knesewitsch, Jakob, Bannwaldseestrasse
69, D-8000 München 70 (DE)
Erfinder: Pointner, Manfred, Ludwig- Braille-
Strasse 10, D-8000 München 70 (DE)

EP 0 158 007 B1

## Beschreibung

Ohne besondere Maßnahmen entsteht in - von redundant betriebenen Stromversorgungen gespeisten - elektronischen Systemen beim Einstecken des zweiten Stromversorgungsgerätes, z. B. nach einer Instandsetzung, ein Einbruch der Stromversorgungs-Ausgangsspannung und damit eine vorübergehende oder dauernde Störung der Systemfunktion. Diese Störung wird dadurch verursacht, daß dem - auf die Betriebspannung aufgeladenen - Ausgangskondensator der bereits in Betrieb befindlichen Stromversorgung der spannungslose Ausgangskondensator der zu steckenden Stromversorgung beim Einstecken parallel geschaltet wird, was zu einem Einbruch der Betriebsspannungen führt.

Die Erfindung bezieht sich auf eine Vorrichtung zur redundanten Stromversorgung mit einer Aufnahmevorrichtung und wenigstens zwei, in die Aufnahmevorrichtung einsetzbaren Stromversorgungseinsätzen, die im eingesetzten Zustand in der Aufnahmevorrichtung mechanisch gehalten sind, wobei die Aufnahmevorrichtung und die Stromversorgungseinsätze mit Steckverbindern versehen sind, die Kontaktstücke für die Eingangsspannung und Kontaktstücke für die Ausgangsspannung des jeweiligen Stromversorgungseinsatzes aufweisen, wobei der Stromversorgungseinsatz jeweils einen elektrisch unmittelbar mit dem Steckverbinder des Stromversorgungseinsatzes verbundenen Ausgangskondensator enthält.

Eine derartige Einrichtung ist bereits aus der DE-PS 26 49 087 bekannt. Bei der bekannten Vorrichtung zur redundanten Stromversorgung sind zwei ausgangsseitig elektrisch parallel geschaltete, geregelte Stromversorgungsgeräte vorgesehen. Beide Geräte sind in gleicher Weise aufgebaut. Die Leistungsteile der Stromversorgungseinsätze sind nur mit den geerdeten Minuspolen unmittelbar parallel geschaltet. Die Pluspole werden über zwei Brückenstecker zusammengeschaltet. Leistungsteil und zugehöriger Brückenstecker sind konstruktiv so ausgebildet, daß ein Entnehmen und Einsetzen des Leistungsteiles erst nach dem Entfernen des zugeordneten Brückensteckers möglich ist. Durch diese Maßnahmen wird sichergestellt, daß beim Einstecken des Leistungsteiles ein Ausgangskondensator zunächst über zwei Widerstände ohne Rückwirkung auf die Verbraucherspeisung aufgeladen wird. Der Brückenstecker kann dann eingesetzt und danach der Leistungteil in Betrieb genommen werden.

Eine andere Lösung des eingangs genannten Problems besteht darin, in die Leitung zwischen dem Ausgangskondensator jeder Stromversorgung und dem Parallelschaltpunkt je eine Diode einzubauen, die den Energiefluß nur in der Richtung vom Stromversorgungsgerät zum Verbraucher zuläßt. Dadurch wird der einleitend beschriebene Spannungseinbruch vermieden, ohne daß hierzu besondere konstruktive Maßnahmen erforderlich sind.

Der an diesen Dioden entstehende Spannungsabfall verringert jedoch den Wirkungsgrad der Geräte und vergrößert die lastabhängigen Ausgangsspannungsschwankungen. Besonders bei niedrigen Betriebsspannungen und bei geforderten engen Toleranzen kann sich daher eine Verwendung solcher Entkoppeldioden als nicht zulässig erweisen.

Aus der US-PS 3 993 935 ist bereits eine Baugruppe der Datentechnik bekannt, die einen Steckverbinder mit voreilenden Kontakten aufweist. Mit Hilfe dieses Steckverbinders wird erreicht, daß bei der Inbetriebnahme der Baugruppe, d. h. beim Einstecken der Stiftleiste in eine zugehörige Federleiste einer Aufnahmevorrichtung der Betrieb der Datenverarbeitungseinrichtung nicht dadurch gestört wird, daß zunächst undefinierte Betriebszustände herrschen und fehlerhafte Signale an ein Bussystem abgegeben werden. Im einzelnen ist dafür gesorgt, daß beim Herstellen der Steckverbindung zuerst Sender und Empfänger mit Betriebsspannung und eine Steuerlogik sowie ein Pufferspeicher mit Betriebsspannung und Rücksetzpotential versorgt werden. Ferner wird mit Hilfe von Stromschleifen, die jeweils über mehrere Kontaktpaare geführt sind, erreicht, daß gewisse Verbindungen erst nach vollständig und frei von Verkantungen eingesetzter Stiftleiste hergestellt werden. Dies gilt z. B. für die Verbindung eines Rücksetzeinganges mit einem Rücksetzsignalbus und für die Zuführung der Betriebsspannung zu Schaltungen bei offenem Kollektorausgang.

Bei den Schaltungen mit offenem Kollektorausgang ist am Ausgang eine endliche Kapazität wirksam, so daß unmittelbar nach Herstellen der Steckverbindung ein Ladestrom aus der Busleitung fließt. Um dabei Spannungseinbrüche auf der Busleitung zu vermeiden, ist auf der Seite der Busleitung ein zusätzlicher Kondensator angeordnet. Eine Vorrichtung zur Begrenzung der Steckgeschwindigkeit ist nicht vorgesehen.

Aufgabe der Erfindung ist es, eine wie im Oberbegriff des Anspruches 1 angegebene Vorrichtung zur redundanten Stromversorgung derart auszubilden, daß die Ausgänge von zwei oder mehr in die Aufnahmevorrichtung vollständig eingesetzten Stromversorgungseinsätzen unmittelbar parallel geschaltet sind, ohne daß hierzu Brückenstecker erforderlich sind.

Gemäß der Erfindung wird die Vorrichtung zur Lösung dieser Aufgabe in der im kennzeichnenden Teil des Patentanspruches 1 angegebenen Weise ausgebildet.

Durch diese Maßnahmen ergibt sich, daß beim Einsetzen eines Stromversorgungseinsatzes in die Aufnahmevorrichtung zuerst die Verbindung der Kontaktstücke für die Eingangsspannung und erst zu einem späteren Zeitpunkt die Verbindung der Kontaktstücke für die Ausgangsspannung hergestellt wird. Dabei ergibt sich der Vorteil, daß ein Stromversorgungsgerät, das zusätzlich eingesetzt wird, beim Herstellen der ausgangsseitigen Verbindung bereits die Betriebsspannung abgibt und somit keine Störung der Systemfunktion bzw. keine unzulässig großen Sprünge der Ausgangsspannung auftreten können. Als weiterer Vorteil ergibt sich, daß die Kondensatoren gegen Kurzschlußströme geschützt sind, ohne daß hierzu besondere Maßnahmen erforderlich sind.

Man kann das Stromversorgungsgerät jeweils mit einem eigenen Steckverbinder für die Eingangsspannung und für die Ausgangsspannung versehen und die Steckverbinder so ausbilden, anordnen bzw. auswählen, daß beim Einsetzen des Stromversorgungseinsatzes an die Aufnahmevorrichtung zuerst der für die Eingangsspannung vorgesehene Steckverbinder und zu einem späteren Zeitpunkt der für die Ausgangsspannung vorgesehene Steckverbinder eine elektrische Verbindung herstellen. Dabei können gleichartige, jedoch in Steckrichtung gegeneinander versetzt angeordnete Steckverbinder Verwendung finden.

In Weiterbildung der Erfindung wird die Vorrichtung derart ausgebildet, daß sich die Kontaktstücke für die Eingangsspannung und die Kontaktstücke für die Ausgangsspannung jeweils in ein und demselben Mehrfachsteckverbinder befinden, und daß von den beiden einander zugeordneten Mehrfachsteckverbindern jeweils nur einer die unterschiedlich angeordneten oder ausgebildeten Kontaktstücke enthält.

Zweckmäßigerweise enthält dabei nur der im Stromversorgungseinsatz angeordnete Steckverbinder die unterschiedlich angeordneten oder ausgebildeten Kontaktstücke.

Als derartiger Steckverbinder kann insbesondere ein handelsüblicher Messersteckverbinder mit sogenannten voreilenden Kontakten Verwendung finden, wobei nur die Eingangsspannung über voreilende Kontakte geführt wird. Die Ausgangsspannung wird in diesem Fall über die "nicht voreilenden" Kontakte dieser Messerleiste geführt.

Aus der Druckschrift "Elektromechanische Bauteile für elektronische Geräte", Datenbuch 1980/81, Siemens AG, Bestell-Nr. N 281-2009, Seite 139 sind bereits Mehrfachsteckverbinder für gedruckte Schaltungen bekannt, die als Messerleisten ausgebildet sind und ein bzw. drei voreilende Kontaktmesser auf bestimmten Plätzen aufweisen. Mit Hilfe derartiger voreilender Kontaktmesser läßt sich in elektronischen Geräten sicherstellen, daß beim Herstellen einer Mehrfachsteckverbindung eine vorgegebene Reihenfolge der Kontaktgabe eingehalten wird. Anwendungshinweise sind dabei nicht gegeben. Wie z. B. aus der DE-AS 1 172 325 hervorgeht, kann es z. B. bei der Stromversorgung von Klystronen auf eine bestimmte Reihenfolge beim Anlegen von Versorgungsspannungen an eine elektronische Schaltung ankommen.

Zweckmäßigerweise enthält der Mehrfachsteckverbinder in Buchsen des zugeordneten Mehrfachsteckverbinders eingreifende Stiftkontaktstücke, wobei die Stiftkontaktstücke versetzt zueinander angeordnet sind.

In Weiterbildung der Erfindung ist die Einsatzvorrichtung zugleich als Arretiervorrichtung ausgebildet.

Vorzugsweise wird die Vorrichtung zur Begrenzung der Steckgeschwindigkeit derart ausgebildet, daß die Einsetzvorrichtung mit wenigstens einer Schraube versehen ist, die jeweils unverlierbar im Stromversorgungseinsatz gehaltert ist und die beim Eindrehen in zugeordnete Gewindegänge auf seiten der Aufnahmevorrichtung eine Überführung des Stromversorgungseinsatzes in eine Endstellung herbeiführt, bei der sämtliche Paare von einander zugeordneten Kontaktstücken im Eingriff miteinander stehen.

Dabei kann der mechanische Widerstand der sich zuerst berührenden Kontaktstücke ausreichen, um einen Anschlag zu bilden, so daß von der durch den Anschlag vorgegebenen Position des Stromversorgungseinsatzes aus die Steckkräfte mit Hilfe der Schrauben überwunden werden müssen.

Eine besonders weitgehende Sicherheit gegen eine zu schnelle zeitliche Aufeinanderfolge der Kontaktgabe läßt sich dadurch erzielen, daß in einer Position des Stromversorgungseinsatzes, bei der die einander zugeordneten Kontaktstücke für die Ausgangsspannung einen vorgegebenen Abstand voneinander aufweisen, die Schrauben einen Anschlag bilden. Dabei können als Einrichtung zur Begrenzung der Steckgeschwindigkeit insbesondere die in Einsätzen der sogenannten Bauweise 7R vorgesehenen Befestigungsschrauben Verwendung finden. Diese Befestigungsschrauben dienen dort bisher nur zum Überwinden der Steck- bzw. Ziehkräfte beim Einsetzen bzw. Ziehen der Einsätze und sind z. B. aus dem DE-GM 79 08 078 bekannt.

In weiterer Ausgestaltung der Erfindung wird die Vorrichtung derart ausgebildet, daß ein bei dem Steckverbinder des Stromversorgungseinsatzes zusätzlich zu den Kontaktstücken für die Eingangsspannung und den Kontaktstücken für die Ausgangsspannung vorgesehenes Kontaktstück über einen Widerstand mit einem ersten Anschluß des Ausgangskondensators verbunden ist, und daß bei der Aufnahmevorrichtung ein das dem zusätzlichen Kontaktstück zugeordnetes Kontaktstück und das dem ersten Anschluß des Ausgangskondensators zugeordnete Kontaktstück unmittelbar miteinander verbunden sind und daß die Kontaktstücke derart unterschiedlich angeordnet und/oder ausgebildet sind, daß beim Einsetzen des Einsatzes in die Aufnahmevorrichtung die Kontaktstücke für den Widerstand und die Kontaktstücke für den zweiten Anschluß des Kondensators zu einem früheren Zeitpunkt in Berührung miteinander kommen, als die dem ersten Anschluß des Kondensators zugeordneten Kontaktstücke. Auf diese Weise wird erreicht, daß der Speicherkondensator am Ausgang des in Betrieb zu nehmenden Stromversorgungsgerätes nicht nur von diesem Stromversorgungsgerät selbst, sondern auch über einen ausgangsseitigen Ladestromkreis vom Ausgang des anderen Stromversorgungsgerätes her geladen wird.

Durch diese Maßnahmen ergibt sich der Vorteil, daß der ausgangsseitige Speicherkondensator schneller geladen wird und somit die Steckgeschwindigkeit in einem verringerten Maße begrenzt zu werden braucht. Insbesondere kann das Stromversorgungsgerät mit einer Begrenzung des Einschalt- bzw. Anlaufstromes versehen werden, ohne daß sich hieraus Schwierigkeiten für die ausgangsseitige Parallelschaltung mit einem oder mehreren weiteren Stromversorgungsgeräten ergeben.

Man kann die Kontaktstücke der Steckverbinder derart ausbilden und/oder anordnen, daß beim Einsetzen des Stromversorgungsgerätes in die Aufnahmevorrichtung in einer ersten Phase die Kontaktstücke für die Eingangsspannung und in einer zweiten Phase die Kontaktstücke für den ausgangsseitigen Ladestrom miteinander verbunden werden und daß erst in einer dritten Phase die unmittelbare Parallelschaltung der ausgangsseitigen Speicherkondensatoren vorgenommen wird.

Eine zweckmäßige Ausgestaltung der Vorrichtung, bei der nur zwei aufeinanderfolgende Einschaltphasen und somit besonders einfach aufgebaute Steckverbinder Verwandung finden können, besteht in weiterer Ausgestaltung der Erfindung darin, daß die Kontaktstücke derart unterschiedlich angeordnet und/oder ausgebildet sind, daß beim Einsetzen des Einsatzes in die Aufnahmevorrichtung zuerst die Kontaktstücke für die Eingangsspannung, die Kontaktstücke für den Widerstand und die Kontaktstücke für den zweiten Anschluß des Kondensators und zu einem späteren Zeitpunkt die Kontaktstücke für den ersten Anschluß des Kondensators in Berührung miteinander kommen.

Die Erfindung wird anhand der in den Figuren dargestellten Ausführungsbeispiele näher erläutert.

Es zeigen

Fig. 1 eine Einrichtung zur redundanten Stromversorgung mit zwei Stromversorgungseinsätzen,

Fig. 2 eine Aufnahmevorrichtung mit darin einsetzbarem Stromversorgungseinsatz,

die Figuren 3 bis 5 zeigen Steckverbinder mit voreilenden Kontakten, und zwar

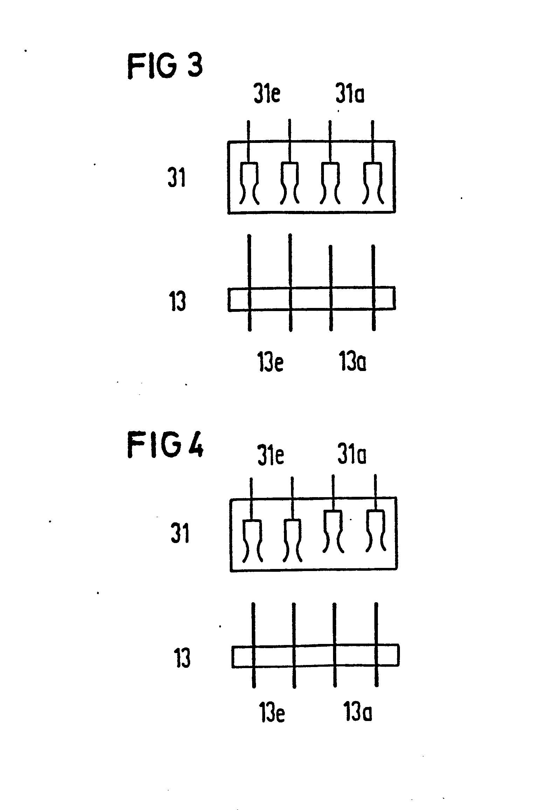

Fig. 3 mit unterschiedlich ausgebildeten Kontaktstiften,

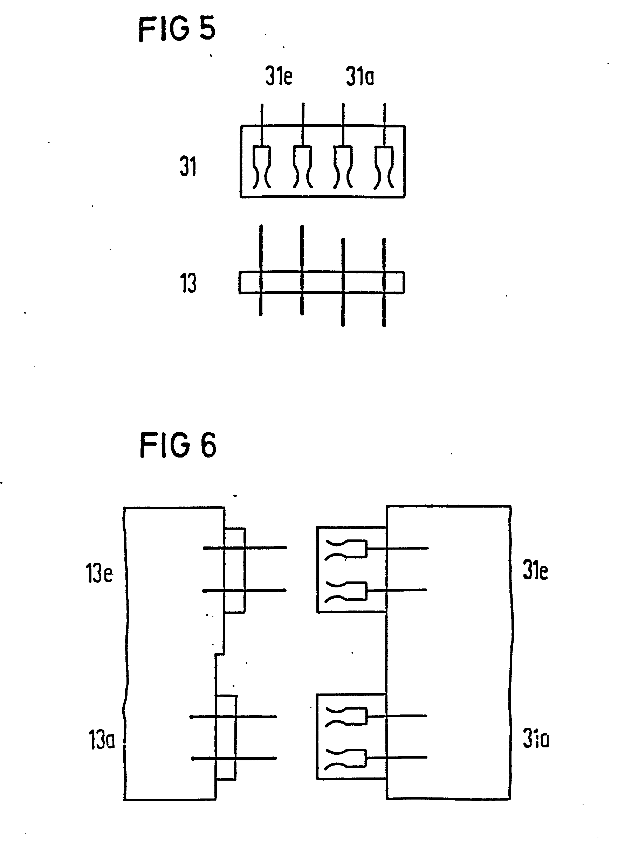

Fig. 4 mit unterschiedlich ausgebildeten Kontaktfedern und

Fig. 5 mit unterschiedlich angeordneten Kontaktstiften.

Fig. 6 zeigt versetzt angeordnete Steckverbinder für eine Eingangs- und eine Ausgangsspannung. In

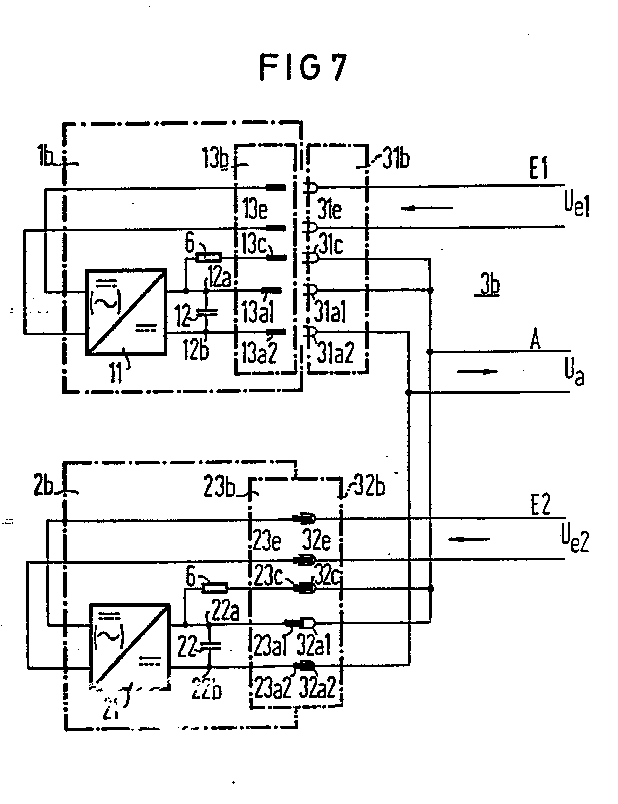

Fig. 7 ist eine Einrichtung zur redundanten Stromversorgung gezeigt, bei der die Stromversorgungseinsätze mit einem zusätzlichen Kondensator-Ladestrompfad versehen sind.

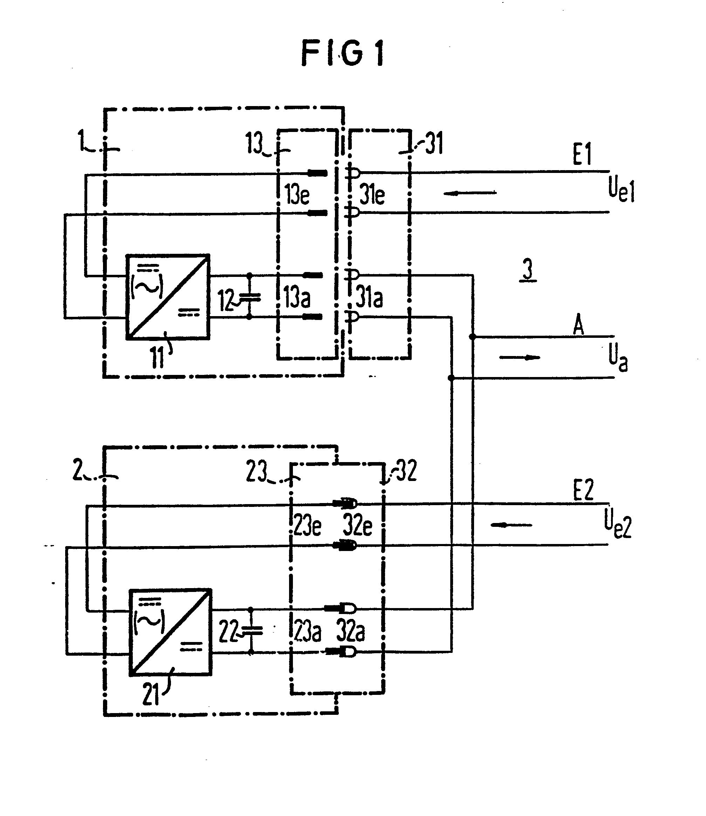

Fig. 1 zeigt eine Vorrichtung zur redundanten Stromversorgung mit zwei gleich aufgebauten Stromversorgungseinsätzen 1 und 2. Der Stromversorgungseinsatz 1 enthält den Spannungsumsetzer 11, dessen Ausgang mit dem Speicherkondensator 12 beschaltet ist. Der Stromversorgungseinsatz 2 enthält den Spannungsumsetzer 21, an dessen Ausgang der Speicherkondensator 22 liegt.

Die Verdrahtung der Aufnahmevorrichtung 3, die insbesondere ein Gestell der sogenannten Bauweise 7R für Nachrichtenübertragungssysteme ist, ist an die Steckverbinder 31 und 32 geführt, deren Gegenstücke der Steckverbinder 13 des Stromversorgungseinsatzes 1 und der Steckverbinder 23 des Stromversorgungseinsatzes 2 sind. Bei dem Umsetzer 11 liegt der Eingang an den voreilenden Kontakten 13e und der Ausgang an den nicht voreilenden Kontakten 13a des Steckverbinders 13. Beim Umsetzer 21 liegt der Eingang an den voreilenden Kontakten 23e und der Ausgang an den nicht voreilenden Kontakten 23a des Steckverbinders 23. Die Eingangsspannungen $U_{e1}$ bzw. $U_{e2}$ der Umsetzer können je nach Art des Umsetzers 11 bzw. 21 Gleich- oder Wechselspannungen sein.

Fig. 1 zeigt den Zustand, bei dem der Stromversorgungseinsatz 2 vollständig in die Aufnahmevorrichtung 3 eingesetzt ingesteckten Zustand befindet.

Die Eingangsspannung $U_{e2}$ ist über die Kontaktstücke 23e, 32e, an den Eingang des Umsetzers 21 geführt. Der Ausgang des Umsetzers 21 ist über die Kontaktstücke 23a, 32a an den Ausgang A für die Betriebsspannung $U_a$ eines zu speisenden elektronischen Systems geführt.

Der Steckverbinder 13 enthält die beiden voreilenden Kontakte 13e und die beiden nicht voreilenden Kontakte 13a. Beim Einsetzen des Stromversorgungseinsatzes in die Aufnahmevorrichtung 3 wird daher zunächst zwischen den Kontaktstücken 13e und 31e und erst zu einem späteren Zeitpunkt zwischen den Kontaktstücken 13a und 31a hergestellt. Dies beruht darauf, daß die Stirnseiten der Kontaktstücke 13e und 13a um den Betrag S gegeneinander versetzt angeordnet sind.

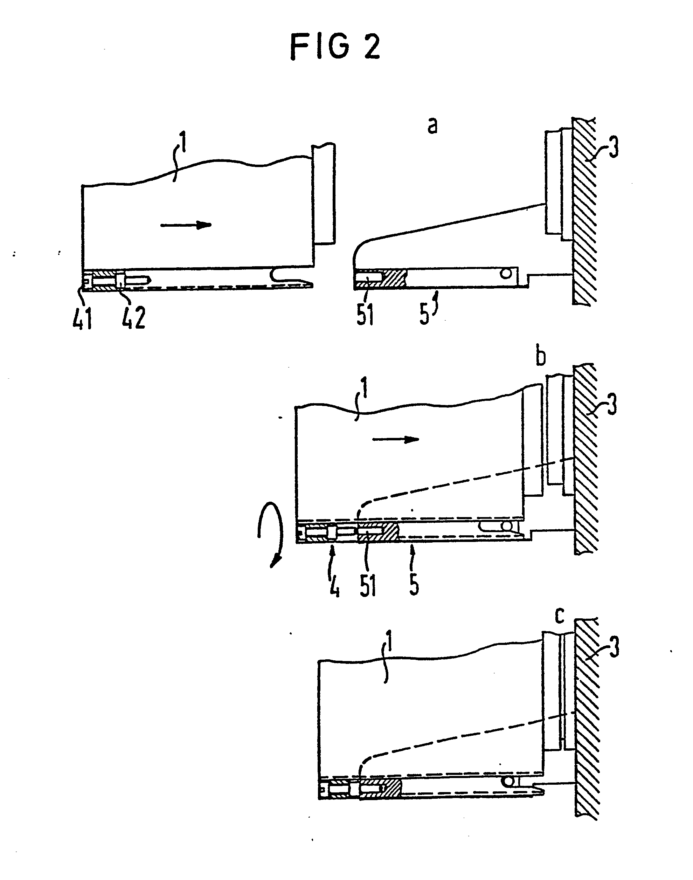

Die Geschwindigkeit, mit der die Kontaktgaben durch die voreilenden Kontakte und die nicht voreilenden Kontakte aufeinanderfolgen, wird zweckmäßigerweise durch eine Vorrichtung zur Begrenzung der Steckgeschwindigkeit begrenzt, die aus Fig. 2 hervorgeht.

Fig. 2 zeigt das Einsetzen des Stromversorgungseinsatzes in die Aufnahmevorrichtung 3, und zwar von oben nach unten die folgenden drei Phasen bzw. Positionen.

In Position a ist der Stromversorgungseinsatz 1 noch von der Aufnahmevorrichtung 3 getrennt und in Position b soweit in die Aufnahmevorrichtung eingesetzt, daß der Steckverbinder des Stromversorgungseinsatzes und der zugeordnete Steckverbinder in der Aufnahmevorrichtung 3 sich mit einem nur geringen Abstand unmittelbar gegenüberstehen. In Position c ist der Stromversorgungseinsatz ganz eingesetzt und durch eine Arretiervorrichtung verriegelt.

Als Vorrichtung zur Begrenzung der Steckgeschwindigkeit dient eine Schraube 41. Die Schraube 41 ist mit einem Ansatz 42 versehen und zwischen Zylinderkopf und Ansatz 42 unverlierbar gehaltert. In Position b bildet der Anfang der Gewindebohrung 51 einen Anschlag für die Schraube 41, so daß der in die Aufnahmevorrichtung 3 einzusetzende Stromversorgungseinsatz 1 zunächst in Position b angehalten wird.

Ausgehend von Position b wird der Stromversorgungseinsatz 1 durch Drehen der Schraube 41 langsam in die Endstellung überführt, bei der alle Kontaktstücke der einander zugeordneten Steckverbinder 13 und 31 einander berühren.

Wesentlich für die Vorrichtung zur Begrenzung der Steckgeschwindigkeit ist, daß während der Überführung des Stromversorgungseinsatzes 1 von der Position b in die Position c die Bewegung eines Betätigungsgliedes in definierter Weise in eine Verschiebung des Stromversorgungseinsatzes übersetzt wird. Dies kann anstelle mittels der Schraube 41 z. B. mit Hilfe eines Bajonettverschlusses geschehen.

Eine andere Möglichkeit zur Halterung der Schraube 41 besteht darin, den Kopf in einem Käfig anzuordnen, der den Schraubenkopf in Steckrichtung vorn und hinten hält.

Die Fig. 3 bis 5 zeigen Varianten der in Fig. 1 gezeigten einander zugeordneten Steckverbinder 13 und 31. Dabei ist jeweils eine Mehrfachbuchsenleiste 31 und eine Mehrfachstiftleiste 13 vorgesehen.

Nach Fig. 3 sind die Federkontakte der Federkontaktleiste 31 gleich ausgebildet und angeordnet. Die Stifte der Mehrfachstiftleisten 13 sind dagegen ungleich lang, d.h. unterschiedlich ausgebildet. Auf der den Federkontakten zugewandten Seite sind die Stirnseiten der Kontaktstücke um einen Betrag versetzt gegeneinander angeordnet, der aufgrund der Bauart der Federkontakte noch eine sichere Kontaktgabe bei allen Kontaktstücken gewährleistet.

Bei Fig. 4 sind die Federkontakte von zwei nicht voreilenden Kontakten etwas in das Innere der Federkontaktleisten versetzt angeordnet.

Nach Fig. 5 sind die Federkontakte und die Stifte jeweils gleich ausgebildet. Die Stifte sind jedoch in der Stiftleiste unterschiedlich angeordnet.

Fig. 6 zeigt eine Ausführungsform, bei der für die Eingangsspannung $U_e$ und die Ausgangsspannung $U_a$ eigene Steckverbinder vorgesehen sind. Beide Steckverbinder sind gleich ausgebildet, aber etwas versetzt gegeneinander angeordnet. Der Versatz hat einen Wert, bei dem noch für beide Stecker eine sichere Kontaktgabe gewährleistet ist.

Fig. 7 zeigt eine Vorrichtung zur redundanten Stromversorgung mit zwei gleich aufgebauten Stromversorgungseinsätzen 1b und 2b. Der Stromversorgungseinsatz 1b enthält den Spannungsumsetzer 11, dessen Ausgang mit dem Speicherkondensator 12 beschaltet ist. Der Stromversorgungseinsatz 2 enthält den Spannungsumsetzer 21, an dessen Ausgang der Speicherkondensator 22 liegt.

Die Verdrahtung der Aufnahmevorrichtung 3b, die insbesondere ein Gestell der sogenannten Bauweise 7R für Nachrichtenübertragungssysteme ist, ist an die Steckverbinder 31b und 32b geführt, deren Gegenstücke der Steckverbinder 13b des Stromversorgungseinsatzes 1b und der Steckverbinder 23b des Stromversorgungseinsatzes 2b sind. Insbesondere sind die Steckverbinder 13b und 23b als Messersteckleisten und die Steckverbinder 31b und 32b als Federsteckleisten ausgebildet. Bei dem Umsetzer 11 liegt der Eingang an den voreilenden Kontakten 13e und der Ausgang an den nicht voreilenden Kontakten 13a1 und 13a2 des Steckverbinders 13b. Beim Umsetzer 21 liegt der Eingang an den voreilenden Kontakten 23e und der Ausgang an den nicht voreilenden Kontakten 23a1 und 23a2 des Steckverbinders 23b. Die Eingangsspannung $U_{e1}$ bzw. $U_{e2}$ der Umsetzer können je nach Art des Umsetzers 11 bzw. 21 Gleich- oder Wechselspannungen sein.

Fig. 7 zeigt den Zustand, bei dem der Stromversorgungseinsatz 2b vollständig in die Aufnahmevorrichtung 3b eingesetzt ist und der Stromversorgungseinsatz 1b sich noch nicht im eingesteckten Zustand befindet.

Die Eingangsspannung $U_{e2}$ ist über die Kontaktstücke 23e, 32e an den Eingang des Umsetzers 21 geführt. Der Ausgang des Umsetzers 21 ist über die Kontaktstücke 23a1, 32a1 und 23a2, 32a2 an den Ausgang A für die Betriebsspannung $U_a$ eines zu speisenden elektronischen Systems geführt.

Der Steckverbinder 13b enthält die beiden voreilenden Kontakte 13e, die voreilenden Kontakte 13c und 13a2 und den nicht voreilenden Kontakt 13a1. Beim Einsetzen des Stromversorgungseinsatzes 1b in die Aufnahmevorrichtung 3b wird daher zunächst sowohl zwischen den Kontaktstücken 13e und 31e als auch zwischen den Kontaktstücken 13c, 13a2 und 31c, 31a2 und erst zu einem späteren Zeitpunkt Kontakt zwischen den Kontaktstücken 13a1 und 31a1 hergestellt. Dies beruht darauf, daß die Stirnseiten der Kontaktstücke gegeneinander versetzt angeordnet sind.

Auch in diesem Fall wird die Geschwindigkeit, mit der die Kontaktgaben durch die voreilenden Kontakte und die nicht voreilenden Kontakte aufeinanderfolgen, zweckmäßigerweise durch eine Vorrichtung zur Begrenzung der Steckgeschwindigkeit begrenzt, die aus Fig. 2 hervorgeht.

Wird - ausgehend von dem in Fig. 7 gezeigten Betriebszustand - der Stromversorgungseinsatz 1b bei bereits speisendem Stromversorgungseinsatz 2b in die Aufnahmevorrichtung 3b eingesetzt, so werden zunächst auf der Eingangsseite die Kontaktstücke 13e mit den Kontaktstücken 31e und auf der Ausgangsseite die Kontaktstücke 13c und 13a2 mit den Kontaktstücken 31c und 31a2 verbunden. In diesem Zwischenzustand wird der Umsetzer 11 in Betrieb genommen und der Speicherkondensator 12 über den Widerstand 6 des Stromversorgungseinsatzes 1b vom Ausgang des Stromversorgungseinsatzes 2b her geladen. Der Speicherkondensator 12 ist dabei über die voreilenden Kontakte 13c, 31c und den in Reihe liegenden, als Vorwiderstand bzw. Ladewiderstand dienenden Widerstand 6 an die Ausgangsspannung $U_a$ angeschlossen.

Entsprechendes gilt für das gleich aufgebaute Stromversorgungsgerät 2b, wenn dieses bei in Betrieb befindlichem Stromversorgungsgerät 1b in die Aufnahmevorrichtung 3b eingesetzt wird.

In Verbindung mit einer mechanischen Einrichtung zur Begrenzung der Steckgeschwindigkeit zwischen der Kontaktgabe der voreilenden Kontakte und der Kontaktgabe der nicht voreilenden Kontakte wird erreicht, daß der ausgangsseitige Speicherkondensator 12 bzw. 22 des zu steckenden Stromversorgungsgerätes 1b bzw. 2b bereits ausreichend aufgeladen ist, wenn über die nicht voreilenden Steckkontakte die Speicherkondensatoren 12 und 22 der beiden Stromversorgungsgeräte 1b und 2b einander unmittelbar parallel geschaltet werden.

Auf diese Weise werden unzulässig große Spannungssprünge und/oder Ladeströme auch dann wirksam vermieden, wenn das zusätzlich in Betrieb zu nehmende Stromversorgungsgerät - insbesondere bedingt durch eine Begrenzung des vom Eingang aufgenommenen Einschaltstromes - nur langsam anläuft.

Die Aufladung des Speicherkondensators 12 bzw. 22 kann nur vom Ausgang her erfolgen oder vom Ausgang her unterstützt werden. In beiden Fällen ergibt sich bei vorgegebenem maximal zulässigen Einbruch der Ausgangsspannung eine Erhöhung der höchst zulässigen Steckgeschwindigkeit. Der Anwendungsbereich der Vorrichtung nach Fig. 2 läßt sich dadurch wesentlich vergrößern.

Der zusätzliche Widerstand wird insbesondere derart bemessen, daß der Maximalwert des durch diesen Widerstand fliessenden Stromes gerade noch nicht dazu führt, daß das speisende Stromversorgungsgerät in den Zustand der Strombegrenzung gerät. Z. B. betragen die Nennspannung und der Nennstrom eines einzelnen Stromversorgungsgerätes 5 V bzw. 10 A. Die Strombegrenzung setzt z. B. bei 15 % Überstrom ein. Der anfängliche Ladestrom darf dann im betrachteten Beispiel 1,5 A betragen. Da zu Beginn des Ladevorganges die gesamte Ausgangsspannung $U_a$ am Widerstand 6 liegt, ergibt sich der Wert des Widerstandes 6 zu $\frac{5 V}{1,5 A}$ = 3,33 Ω.

Auch bei der Vorrichtung nach Fig. 7 können die Steckverbinder grundsätzlich entsprechend Fig. 3 bis 6 ausgebildet werden, lediglich mit der Maßgabe, daß anstatt zwei voreilenden und zwei nicht voreilenden Kontaktstücken eine Zahl von vier voreilenden und einem nicht voreilenden Kontaktstück Verwendung findet.

**Patentansprüche**

1. Vorrichtung zur redundanten Stromversorgung mit einer Aufnahmevorrichtung (3) und wenigstens zwei, in die Aufnahmevorrichtung (3) einsetzbaren Stromversorgungseinsätzen (1, 2), die im eingesetzten Zustand in der Aufnahmevorrichtung mechanisch gehalten sind, wobei die Aufnahmevorrichtung (3) und die Stromversorgungseinsätze (1, 2) mit Steckverbindern (31, 13; 32, 23) versehen sind, die Kontaktstücke (13e, 31e; 23e, 32e) für die Eingangsspannung ($U_{e1}$; $U_{e2}$) und Kontaktstücke (13a, 31a, 23a, 32a) für die Ausgangsspannung ($U_a$) des jeweiligen Stromversorgungseinsatzes (1, 2) aufweisen, wobei der Stromversorgungseinsatz (1, 2) jeweils einen elektrisch unmittelbar mit dem Steckverbinder (13, 23) des Stromversorgungseinsatzes (1, 2) verbundenen Ausgangskondensator (12, 22) enthält,

dadurch gekennzeichnet,

daß die Kontaktstücke (13e, 31e; 13a, 31a, 23e, 32e; 23a, 32a) derart unterschiedlich ausgebildet oder angeordnet sind, daß die Stirnseiten der Kontaktstücke (13e, 31e; 23e, 32e) für die Eingangsspannung ($U_{e1}$, $U_{e2}$), bezogen auf die Stirnseiten der Kontaktstücke (13a, 31a; 23a, 32a) für die Ausgangsspannung ($U_a$) in Steckrichtung versetzt angeordnet sind und daß die Stromversorgungseinsätze (1, 2) mit einer Einsetzvorrichtung (4, 5) versehen sind, die mechanische Mittel (41, 51) enthält, die es gestatten, den Stromsorgungseinsatz (1, 2) von einer Position (Fig. 2b), bei der sich zumindest noch nicht die Kontaktstücke (13a, 31a; 23a, 32a) für die Ausgangsspannung berühren, in die Endlage (Fig. 2C), bei der alle Paare einander zugeordneter Kontaktstücke in Berührung miteinander stehen, mit einer derart begrenzten Steckgeschwindigkeit zu überführen, daß die Ausgangsspannung des einzusetzenden Stromversorgungseinsatzes vorhanden ist, bevor die Ausgänge der Stromversorgungseinsätze parallel geschaltet werden.

2. Vorrichtung nach Anspruch 1,
dadurch gekennzeichnet,
daß sich die Kontaktstücke (13e, 31e; 23e, 32e) für die Eingangsspannung und die Kontaktstücke (13a, 31a; 23a, 32a) für die Ausgangsspannung jeweils in ein und demselben Mehrfachsteckverbinder (13, 31, 23, 32) befinden, und daß von den beiden einander zugeordneten Mehrfachsteckverbindern (13, 31; 23, 32) jeweils nur einer die unterschiedlich angeordneten oder ausgebildeten Kontaktstücke (13a, 13e) enthält.

3. Vorrichtung nach Anspruch 2,
dadurch gekennzeichnet,
daß nur der im Stromversorgungseinsatz (1, 2) angeordnete Steckverbinder (13, 23) die unterschiedlich angeordneten oder ausgebildeten Kontaktstücke (13e, 13a) enthält.

4. Vorrichtung nach Anspruch 2 oder 3
dadurch gekennzeichnet,
daß in dem Mehrfachsteckverbinder (13, 23) der in Buchsen des zugeordneten Mehrfachsteckverbinders (31, 32) eingreifende Stiftkontaktstücke enthält, die Stiftkontaktstücke versetzt zueinander angeordnet sind.

5. Vorrichtung nach einem der Ansprüche 1 bis 4
dadurch gekennzeichnet,
daß die Einsetzvorrichtung (4, 5) zugleich als Arretiervorrichtung ausgebildet ist.

6. Vorrichtung nach einem der Ansprüche 1 bis 5,
dadurch gekennzeichnet,
daß die Einsetzvorrichtung mit wenigstens einer Schraube (41) versehen ist, die jeweils unverlierbar im Stromversorgungseinsatz gehalten ist und die beim Eindrehen in zugeordnete Gewindegänge (51) auf Seiten der Aufnahmevorrichtung (3) eine Überführung des Stromversorgungseinsatzes (1, 3) in eine Endstellung herbeiführt, bei der sämtliche Paare von einander zugeordneten Kontaktstücken im Eingriff miteinander stehen.

7. Vorrichtung nach Anspruch 5,
dadurch gekennzeichnet,
daß in einer Position (b) des Stromversorgungseinsatzes (1, 2), bei der die einander zugeordneten Kontaktstücke für die Ausgangsspannung (U$_a$) einen vorgegebenen Abstand voneinander aufweisen, die Schrauben (41) einen Anschlag bilden.

8. Vorrichtung nach einem der Ansprüche 1 bis 7,
dadurch gekennzeichnet,
daß bei dem Steckverbinder (13b, 23b) des Stromversorgungseinsatzes (1b, 2b) zusätzlich zu den Kontaktstücken (13e, 23e) für die Eingangsspannung (U$_{e1}$, U$_{e2}$) und den Kontaktstücken (13a1, 13a2, 23a1, 23a2) für die Ausgangsspannung (U$_a$) vorgesehenes Kontaktstück (13b, 23b) über einen Widerstand (6) mit einem ersten Anschluß (12a, 22a) des Ausgangskondensators (12, 22) verbunden ist, und daß bei der Aufnahmevorrichtung (3b) ein das dem zusätzlichen Kontaktstück (13c, 23c) zugeordnetes Kontaktstück (31c, 32c) und das dem ersten Anschluß (12a, 22a) des Ausgangskondensators (12, 22) zugeordnete Kontaktstück (31a1, 32a1) unmittelbar miteinander verbunden sind und daß die Kontaktstücke (13e, 31e; 13c, 31c; 13a1, 13a2; 31a1, 31a2; 23e, 32e; 23c, 32c; 23a1, 32a1, 23a2, 32a2) derart unterschiedlich angeordnet und/oder ausgebildet sind, daß beim Einsetzen des Einsatzes (1b, 2b) in die Aufnahmevorrichtung (3b) die Kontaktstücke (13c, 31c; 23c, 32c) für den Widerstand (6) und die Kontaktstücke (13a2, 31a2; 23a2, 32a2) für den zweiten Anschluß (12b, 22b) des Kondensators (12, 22) zu einem früheren Zeitpunkt in Berührung miteinander kommen, als die dem ersten Anschluß (12a, 22a) des Kondensators (12, 22) zugeordneten Kontaktstücke (13a1, 31a1; 23a1, 32a1).

9. Vorrichtung nach Anspruch 8,
dadurch gekennzeichnet,
daß die Kontaktstücke (13e, 31e; 13c, 31c; 13a1, 31a1; 13a2, 31as2; 23e, 32e; 23c, 32c; 23a1, 32a1; 23a2, 32a2) derart unterschiedlich angeordnet und/oder ausgebildet sind, daß beim Einsetzen des Einsatzes (1b, 2b) in die Aufnahmevorrichtung (3b) zuerst die Kontaktstücke (13e, 31e; 23e, 32e) für die Eingangsspannung (U$_{e1}$, U$_{e2}$) die Kontaktstücke (13c, 31c; 23c, 32c) für den Widerstand (6) und die Kontaktstücke (13a2, 31a2; 23a2, 32a2) für den zweiten Anschluß (12b, 22b) des Kondensators (12, 22) und zu einem späteren Zeitpunkt die Kontaktstücke (13a1, 31a1; 23a1, 32a1) für den ersten Anschluß (12a, 22a) des Kondensators (12, 22) in Berührung miteinander kommen.

## Claims

1. Apparatus for redundant current supply comprising a receiving device (3) and at least two current supply units (1, 2) which can be coupled into the receiving device and which, in the coupled state, are mechanically supported in the receiving device, where the receiving device (3) and the current supply units (1, 2) are each provided with plug connectors (31, 13; 32, 23) which comprise contact components (13e, 31e; 23e, 32e) for the input voltage (U$_{e1}$, U$_{e2}$) and contact components (13a, 31a, 23a, 32a) for the output voltage (U$_a$) of the respective current supply unit (1, 2), where each respective current supply unit (1, 2) contains an output capacitor (12, 22) which is electrically directly connected to the plug connector (13, 23) of that current supply unit (1, 2), characterised in that the contact components (13e, 31e; 13a, 31a, 23e, 32e; 23a, 32a) are designed or arranged in different fashions such that the front ends of the contact components (13e, 31e; 23e, 32e) for the input voltage (U$_{e1}$, U$_{e2}$) are offset in the insertion direction relative to the front ends of the contact components (13a, 31a; 23a, 32a) for the output voltage ($U_a$), and that the current supply units (1, 2) are provided with an inserting device (4, 5) which contains mechanical means (41, 51) which allow the current supply unit (1, 2) to move from a position (Fig. 2b) in which the contact components (13a, 31a; 23a, 32a) for the output voltage at least are not yet in contact, into the end position (Fig. 2C) in which all the pairs of mutually assigned components are in contact, at an insertion speed which is limited such that the output voltage of the current supply unit which is to be coupled occurs before the outputs of the current supply units are connected in parallel.

2. Apparatus as claimed in Claim 1, characterised in that the contact components (13e, 31e; 23e, 32e) for the input voltage and the contact components (13a, 31a; 23a, 32a) for the output voltage are each contained in one and the same multiple plug connector (13, 31, 23, 32), and that only one of the two mutually assigned multiple plug connectors (13, 31; 23, 32) contains the differently arranged or designed contact components (13a, 13b).

3. Apparatus as claimed in Claim 2, characterised in that only that plug connector (13, 23) arranged in the current supply unit (1, 2) contains the differently arranged or designed contact components (13e, 13a).

4. Apparatus as claimed in Claims 2 or 3, characterised in that in the multiple plug connector (13, 23), which contains pin contact components which engage in sockets of the assigned multiple plug connector (31, 32), the pin contact components are mutually offset.

5. Apparatus as claimed in one of Claims 1 to 4, characterised in that the inserting device (4, 5) simultaneously serves as locking device.

6. Apparatus as claimed in one of Claims 1 to 5, characterised in that the inserting device is provided with at least one screw (41) which is in each case held captive in the current supply unit and which, when screwed into assigned threads (51) in the receiving device (3) move the current supply unit (1, 3) into an end position in which all the pairs of mutually assigned contact components engage with one another.

7. Apparatus as claimed in Claim 5, characterised in that when the current supply unit (1, 2) occupies a position (b) in which the mutually assigned contact components for each output voltage ($U_a$) are arranged at a predetermined distance from one another, the screws (41) form a stop.

8. Apparatus as claimed in one of Claims 1 to 7, characterised in that in the plug connector (13b, 23b) of the current supply unit (1b, 2b) a contact component (13b, 23b) provided in addition to the contact components (13e, 23e) for the input voltage ($U_{e1}$, $U_{e2}$) and the contact components (13a1, 13a2, 23a1, 23a2) for the output voltage ($U_a$) is connected via a resistor (6) to a first terminal (12a, 22a) of the output capacitor (12, 22), and that in the receiving device (13b) a contact component (13c, 32c), assigned to the additional contact component (13c, 23c), and the contact component (31a1, 32a1), assigned to the first terminal (12a, 22a) of the output capacitor (12, 22), are directly connected to one another, and that the contact components (13e, 31e; 13c, 31c; 13a1, 13a2; 31a1, 31a2; 23e, 32e; 23c, 32c; 23a1, 32a1, 23a1, 32a2) are arranged and/or designed in different fashions such that when the unit (1b, 2b) is inserted into the receiving device (3b) the contact components (13c, 31c; 23c, 32c) for the resistor (6) and the contact components (13a2, 31a2; 23a2, 32a2) for the second terminal (12b, 22b) of the capacitor (12, 22) contact one another at an earlier time than the contact components (13a1, 31a1; 23a1, 32a1) assigned to the first terminal (12a, 22a) of the capacitor (12, 22).

9. Apparatus as claimed in Claim 8, characterised in that the contact components (13e, 31e; 13c, 31c; 13a1, 31a1; 13a2, 31as2; 23e, 32e; 32c, 32c; 23a1, 32a1; 23a2, 32a2) are arranged and/or designed to differ such that when the unit (1b, 2b) is inserted into the receiving device (3b) firstly the contact components (13e, 31e; 23e, 32e) for the input voltage ($U_{e1}$, $U_{e2}$), the contact components (13c, 31c; 23c, 32c) for the resistor (6) and the contact components (13a2, 31a2; 23a2, 32a2) for the second terminal (12b, 22b) of the capacitor (12, 22) contact one another, and at a later time the contact components (13a1, 31a1; 23a1, 32a1) for the first terminal (12a, 22a) of the capacitor (12, 22) contact one another.

## Revendications

1. Dispositif pour réaliser une alimentation redondante en courant, comportant un dispositif récepteur (3) et au moins deux inserts d'alimentation en courant (1, 2), qui peuvent être insérés dans le dispositif récepteur (3) et sont maintenus mécaniquement à l'état inséré dans le dispositif récepteur, et dans lequel le dispositif récepteur (3) et les inserts d'alimentation en courant (1, 2) sont pourvus de connecteurs (31, 13; 32, 23), qui comportent des organes de contact (13e, 31e; 23e, 32e) pour la tension d'entrée ($U_{e1}$; $U_{e2}$) et des organes de contact (13a, 31a, 23a, 32a) pour la tension de sortie ($U_a$) de l'insert respectif d'alimentation en courant (1, 2), alors que chaque insert d'alimentation en courant (1, 2) contient respectivement un condensateur de sortie (12, 22), qui est relié électriquement et directement au connecteur (13, 23) de l'insert d'alimentation en courant (1, 2), caractérisé par le fait que les organes de contact (13e, 31; 13a, 31a, 23e, 32e; 23a, 32a) sont agencés ou disposés différemment de telle sorte que les faces frontales des organes de contact (13e, 31e; 23e, 32e) pour la tension d'entrée ($U_{e1}$, $U_{e2}$) sont disposés en étant décalés dans les directions d'enfichage par rapport aux faces frontales des organes de contact (13a, 31a; 23a, 32a) pour la tension de sortie (U$_a$), et que les inserts d'alimentation en courant (1, 2) sont munis d'un dispositif d'insertion (4, 5) qui contient des moyens mécaniques (41, 51) qui permettent de transférer l'insert d'alimentation en courant (1, 2) d'une position (figure 2b), dans laquelle les organes de contact (13a, 31a; 23a, 32a) pour la tension de sortie au moins ne se contactent pas encore, dans la position finale (figure 2C), dans laquelle tous les couples d'organes de contact associés entre eux sont en contact réciproque, avec une vitesse d'enfichage limitée de telle sorte que la tension de sortie de l'insert d'alimentation en courant, qui doit être inséré, est présente avant que les sorties des inserts d'alimentation en courant soient branchées en parallèle.

2. Dispositif suivant la revendication 1, caractérisé par le fait que les organes de contact (13e, 31e; 23e, 32e) pour la tension d'entrée et les organes de contact (13a, 31a; 23a, 32a) pour la tension de sortie sont situés respectivement dans un même connecteur multiple (13, 31, 23, 32), et que respectivement seul l'un des deux connecteurs multiples (13, 31; 23, 32), qui sont associés entre eux, contient les organes de contact (13a, 13e) disposés ou agencés différemment.

3. Dispositif suivant la revendication 2, caractérisé par le fait que seul le connecteur (13, 23) disposé dans l'insert d'alimentation en courant (1, 2) contient les organes de contact (13e, 13a) disposés ou agencés différemment.

4. Dispositif suivant la revendication 2 ou 3, caractérisé par le fait que dans le conducteur multiple (13, 23) qui contient des organes de contact à broches s'engageant dans des douilles du connecteur multiple associé (31, 32), les organes de contact à broches sont décalés les uns par rapport aux autres.

5. Dispositif suivant l'une des revendications 1 à 4, caractérisé par le fait que le dispositif d'insertion (4, 5) est réalisé simultanément sous la forme d'un dispositif de blocage.

6. Dispositif suivant l'une des revendications 1 à 5, caractérisé par le fait que le dispositif d'insertion comporte au moins une vis (41), qui est maintenue respectivement de façon imperdable dans l'insert d'alimentation en courant et qui, lorsqu'elle est vissée dans des taraudages associés (51) situés des deux côtés du dispositif récepteur (3), amène l'insert d'alimentation en courant (1, 3) dans une position terminale, dans laquelle tous les couples d'organes de contact associés les uns aux autres s'interpénètrent mutuellement.

7. Dispositif suivant la revendication 5, caractérisé par le fait que lorsque l'insert d'alimentation en courant (1, 2) est dans une position (b), dans laquelle les organes de contact réciproquement associés pour la tension de sortie (U$_a$) sont à une distance réciproque prédéterminée, les vis (41) forment une butée.

8. Dispositif suivant l'une des revendications 1 à 7, caractérisé par le fait qu'un organe de contact (13b, 23b), prévu, dans le cas du capteur (13b, 23b) de l'insert d'alimentation en courant (1b, 2b), en supplément des organes de contact (13e, 23e) pour la tension d'entrée (U$_{e1}$, U$_{e2}$) et des organes de contact (13a1, 13a2, 23a1, 23a2) pour la tension de sortie (U$_a$), est relié par l'intermédiaire d'une résistance (6) à une première borne (12a, 22a) du condensateur de sortie (12, 22), et que dans le dispositif récepteur (3b), un organe de contact (31c, 32c), qui est associé à l'organe de contact supplémentaire (13c, 23c), et l'organe de contact (31a1, 32a1), associé à la première borne (12a, 22a) des condensateurs de sortie (12, 22) sont reliés directement entre eux et que des organes de contact (13e, 31e; 13c, 31c; 13a1, 13a2; 31a1, 31a2; 23e, 32e; 23c, 32c; 23a1, 32a1, 23a2, 32a2) sont disposés et/ou agencés différemment de telle sorte que, lors de l'insertion de l'insert (1b, 2b) dans le dispositif récepteur (3b), les organes de contact (13c, 33c; 23c, 32c) pour la résistance (6) et les organes de contact (13a2, 31a2; 23a2, 32a2) pour la seconde borne (12b, 22b) du condensateur (12, 22) viennent en contact réciproque à un instant qui précède dans le temps l'instant de venue en contact réciproque des organes de contact (13a1, 31a1; 23a1, 32a1) associés à la première borne (12a, 22a) du condensateur (12, 22).

9. Dispositif suivant la revendication 8, caractérisé par le fait que les organes de contact (13e, 31e; 13c, 31c; 13a1, 31a1; 13a2, 31a2; 23e, 32e; 23c, 32c; 23a1, 32a1; 23a2, 32a2) sont disposés et/ou agencés différemment de telle sorte que, lors de l'insertion de l'insert (1b, 2b) dans le dispositif récepteur (3b), tout d'abord les organes de contact (13e, 31e; 23e, 32e) pour la tension d'entrée (U$_{e1}$, U$_{e2}$), les organes de contact (13c, 31c; 23c, 32c) pour la résistance (6) et les organes de contact (13a2, 31a2; 23a2, 32a2) pour la seconde borne (12b, 22b) du condensateur (12, 22) viennent en contact réciproque et qu'à un instant ultérieur les organes de contact (13a1, 31a1; 23a1, 32a1) pour la première borne (12a, 22a) du condensateur (12, 22) viennent en contact réciproque.

# F I G 1

# FIG 2

a

1  3  41  42  51  5

b

1  3  4  51  5

c

1  3

# FIG 3

31e    31a

31

13

13e    13a

# FIG 4

31e    31a

31

13

13e    13a

## FIG 5

31e    31a

31

13

## FIG 6

13e

13a

31e

31a

# FIG 7